# FASCICULE DE BREVET EUROPEEN

(11) **EP 4 161 248 B1**
(45) Date de publication et mention de la délivrance du brevet: **22.05.2024**
(21) Numéro de dépôt: 21736755.6
(22) Date de dépôt: 04.06.2021
(51) Int. Cl.: A01G 13/06, F23B 50/12, F23H 5/00, F23Q 21/00

(54) **DISPOSITIF DE LUTTE ANTIGEL À USAGE AGRICOLE**
FROSTSCHUTZVORRICHTUNG FÜR LANDWIRTSCHAFTLICHEN GEBRAUCH
ANTI-FREEZE DEVICE FOR AGRICULTURAL USE

(30) Priorité: 05.06.2020 MA 49995
(43) Date de publication de la demande: 12.04.2023
(73) Titulaire: Mavor Import Sarl, Casablanca, 20000 (MA)
(72) Inventeur: BOSMANS, Jan, Casablanca, 20000 (MA); ELKISSANI, Kaoutar, Casablanca, 20000 (MA)
(74) Mandataire: AWA Switzerland
(86) Numéro de dépôt international: PCT/MA2021/050006
(87) Numéro de publication internationale: WO 2021/246857

(56) Documents cités:
- FR-A- 1 216 387
- KR-A- 20180 027 775
- KR-B1- 101 524 436
- US-A- 1 767 670
- US-A- 5 144 939
- US-A1- 2009 038 603

## Description

### Domaine technique

La présente invention concerne le domaine de la lutte antigel. En particulier, elle concerne un dispositif de production de la chaleur à usage dans l'agriculture pour lutter contre le phénomène du gel causé par la baisse de température durant certaines périodes de l'année.

### Techniques antérieures

Le gel est un phénomène météorologique correspondant à un abaissement de la température de l'air au dessous de 0°C. Il se produit à certaines époques de l'année et dans certaines zones dites gélives. Le gel c'est aussi les températures froides comme 6°C dans les serres de tomates... etc.

Le gel provoque des dégâts énormes dans les cultures, lorsque la température descend en dessous de 0 °C. Le sol absorbe et emmagasine la chaleur causée par les rayons solaires pendant la journée et la reflète la nuit, ce qui forme une couche inversion à environ 10-15 mètres de hauteur. En général, une perte de chaleur importante survient avant le lever du soleil, ce qui entraîne les dommages les plus graves causés par le gel.

En ce qui concerne les types de gelées, on fait la distinction entre gel d'advection et gel de rayonnement selon les conditions atmosphériques qui en sont la cause.

Le gel d'advection est provoqué par le passage d'une masse d'air froid venue d'une autre région, quand les vents sont relativement forts.

Le gel de rayonnement (ou gelée blanche) se produit seulement de façon localisée et par nuit claire et calme Il existe des techniques pour atténuer ce phénomène par la création d'un mouvement d'air chaud.

Par exemple, les tours antigel provoquent un mouvement de l'air chaud, situé dans la couche d'inversion, vers l'air froid situé au niveau du ras du sol. Les tours antigel comprennent une tour, un moteur placé dans une enceinte étanche, un réservoir de carburant, un panneau de commande et une hélice sur la tour.

Les bougies, sous forme de pots métalliques renfermant chacun près de 5 kg de paraffine sont aussi des solutions assez utilisées par les agriculteurs. Il faut compter 300 à 600 bougies par hectare qui seront allumées en fonction de l'intensité du gel. Le nombre de foyers sera renforcé sur les bordures, du côté du vent dominant et/ou face aux flux d'air froid en fonction de la topographie des lieux.

Il existe aussi les rampes de chauffage au gaz, ou les bruleurs à propane, qui sont moins polluantes que les bougies, avec démarrage automatique facile, par contre elles sont très contraignantes en termes d'installation.

Le document US 5,144,939 A (CHRISTOPHERSON ERNEST W [US]) divulgue un appareil de chauffage de verger brûle du bois ou d'autres granulés de biomasse sensiblement sans produire de suie ou de bavure. L'ensemble de chauffage comprend des composants télescopiques démontables comprenant une chambre de combustion, une cheminée, un foyer et une trémie. Des moyens de contrôle combinés du débit d'air et de carburant contrôlent le processus de combustion. Un four ou un gril peut être inclus dans l'ensemble à des fins de cuisson, si on le souhaite.

Le document KR 101 524 436 B (LIM JAE WOOK [KR]) décrit un poêle combiné à bois de chauffage et à pellets. Cette invention permet de régler facilement la puissance de feu en contrôlant l'alimentation en granulés du poêle, et peut utiliser du bois de chauffage comme combustible. Selon un mode de réalisation préféré de l'invention, le poêle combiné bois de chauffage et granulés comprend : une partie de contrôle d'alimentation en granulés commandant l'alimentation en granulés du poêle pour le contrôle de la puissance de feu, et les granulés étant injectés dans la partie de contrôle d'alimentation en granulés ; une partie d'alimentation en combustible ayant une partie d'ouverture formée sur un côté de celle-ci pour permettre à la partie de contrôle d'alimentation en granulés d'être insérée de manière amovible dans et couplée à la partie d'ouverture, dans laquelle les granulés en tant que combustible de poêle sont alimentés par la partie de contrôle d'alimentation en granulés lorsque l'alimentation en granulés la partie de commande est couplée, et le bois de chauffage comme combustible du poêle est alimenté par la partie d'ouverture lorsque la partie de commande d'alimentation en granulés est détachée ; une partie de combustion de corps principal couplée à la partie d'alimentation en carburant, brûlant le carburant fourni à l'intérieur de celui-ci par l'intermédiaire de la partie d'alimentation en carburant ; et une partie d'échappement reliée à la partie de combustion principale, évacuant vers l'extérieur les gaz de combustion générés à l'intérieur de la partie de combustion du corps principal.

Le document US 2009/038603 A1 divulgue également un état de la technique pertinent.

Les solutions présentées par l'art antérieur, malgré leur efficacité, restent dans la plupart des cas moins abordable en termes de coût et contraignantes sur le plan de déploiement au niveau des exploitations agricoles, en particulier le temps de mise en marche, et aussi sur le plan environnemental (la pollution).

D'où l'intérêt de la présente invention qui a pour objet un dispositif pour la lutte antigel fonctionnant de manière autonome, non polluant (CO2 neutre) et moins énergivore.

### Exposé de l'invention

Le dispositif de lutte antigel selon l'invention est défini dans la revendication 1. II comprend des moyens telle une trémie (réservoir) pour stocker une matière combustible solide, principalement constituée de pellets, qui sont acheminées automatiquement par gravité vers une grille de combustion par le biais d'un canal situé au fond de ladite trémie et faisant une inclinaison de 30 à 45 degrés par rapport à l'horizontale.

A la sortie du canal se trouve une grille placée légèrement en bas du niveau du canal afin de créer une discontinuité entre les pellets qui tombent sur la grille et ceux qui sont encore dans le canal. Cette disposition est très importante pour résoudre le problème d'une possible propagation du feu dans le stock de pellets dans la trémie.

La grille comporte au moins deux plans de combustion. Un premier niveau de combustion constitué par des ouvertures taillées sur la longueur de la grille et disposées de manière parallèles permettant ainsi une combustion partielle des pellets. Un deuxième niveau constitué d'ouvertures de tailles petites et uniformes, par exemple forme carrée, pour capter les pellets partiellement brulés et ainsi maximiser la combustion. Cette disposition est essentielle aussi pour réguler le débit ou flux d'arrivage des pellets sur la grille via le canal.

Pour créer des conditions de combustion optimales, le dispositif comporte des ouvertures pour alimenter la grille avec de l'air frais. Une ouverture principale est située au niveau de la base du dispositif à l'opposé du collecteur d'une cheminée destinée pour le transfert de la chaleur générée au niveau l'enceinte de la grille vers l'extérieur pour chauffer l'air ambiante à proximité des cultures.

Le dispositif antigel de la présente invention dispose de moyen pour optimiser l'orientation de l'air chaud vers les environs des cultures telle une cheminée avec chapeau.

Le dispositif est aussi muni d'une autonomie de démarrage du feu grâce à un système de commande comprenant un réservoir pour liquide inflammable, un moyen pour créer des étincelles, un moyen de mesure de la température ambiante et un moyen pour asperger les pellets sur la grille avec le liquide inflammable. Ledit système de commande comporte une carte électronique pour commander l'ensemble des composants. Il comporte aussi une interface utilisateur pour définir les consignes de démarrage du feu (ex. température ambiante). L'ensemble est alimenté par une source d'énergie telle une batterie.

L'ensemble du dispositif est muni d'un système de pattes pour assurer sa stabilité et aussi pour permettre la récupération des déchets de la combustion via un bac disposé sous la grille.

Selon un autre aspect particulier, le corps du dispositif anti gel est fait d'une matière argileuse, de préférence une argile blanche réfractaire. Les surfaces intérieures en contact avec les pellets ont subi un traitement pour réduire le frottement des pellets avec la surface. Pour une commodité d'usage, la conception du corps peut se faire en un seul bloc ou en plusieurs parties à assembler pour former un seul corps (ex. trémie, la base (support de la grille), cheminée).

Selon un autre aspect, la cheminée comporte un rétrécissement pour créer un effet vortex qui est avantageux pour assurer une propagation de la chaleur sur un large périmètre.

### Description sommaire des dessins

D'autres caractéristiques et avantages de l'invention apparaîtront de manière plus claire dans la description détaillée qui suit en se référant aux dessins annexés, qui sont donnés uniquement à titre d'exemple non limitatif, et dans lesquels :
- Figure 1 : représente une vue sommaire du dispositif selon différentes vues (a , b) .
- Figure 2 représente une variante du dispositif avec un système de vortex.
- Figure 3 : représente une vue de coupe du système de vortex
- Figure 4 : représente le détail de la grille à deux niveaux de combustion.
- Figure 5 : représente le détail de la position de la grille de combustion dans le dispositif.
- Figure 6 : représente les différents composants du système de commande.
- Figure 7 : la position du coffret du système de commande dans le dispositif.
- Figure 8 : représente une configuration de montage du dispositif en trois parties.

### Manière(s) de réaliser l'invention

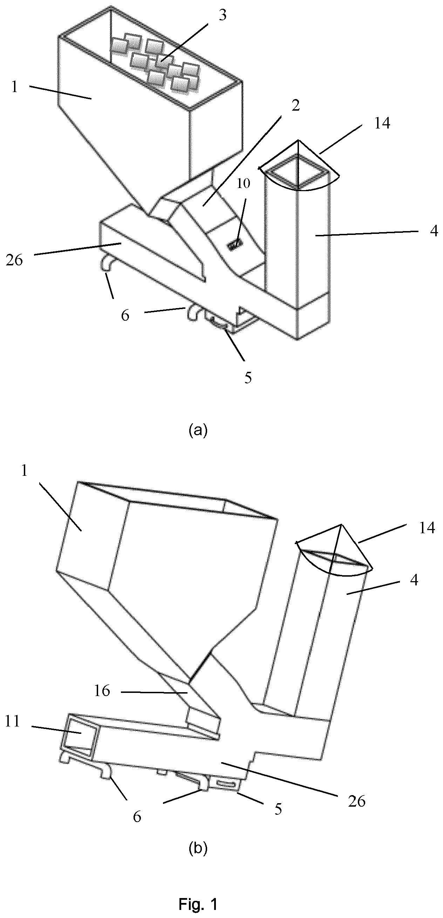

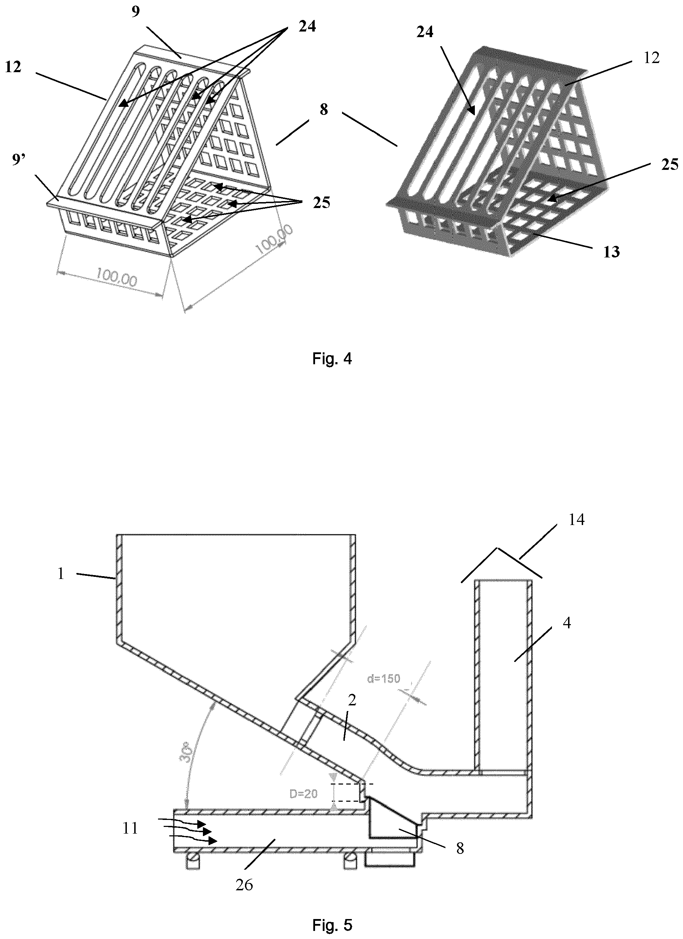

Le dispositif tel qu'illustré à la figure 1, est constitué d'une trémie ou réservoir (1) pour recevoir une matière combustible (3) constituée principalement de pellets ou copeaux de bois séchés. Ladite matière (3) transite par un canal (2) situé au fond de la trémie (1) sous l'effet de la gravité pour rejoindre une grille de combustion (8). L'emplacement et la forme de la grille (8) sont illustrés par les figures 4 et 5. La grille de combustion (8) est située au niveau de la base (26) dans le prolongement du canal (2), ladite grille comporte au moins deux niveaux de combustion, un premier niveau (12) parallèle au plan inférieur (16) du canal (2) avec un décalage vers le bas d'au moins 2 cm, ledit premier niveau (12) est constitué d'un maillage d'ouvertures longitudinales (24) distribuées de manière régulière sur l'ensemble de la surface du plan (12) de la grille, et un deuxième niveau (13) plus bas, constitué par un maillage d'ouverture de tailles petites (25) par rapport au premier niveau et ayant une distribution plus dense. Les pellets partiellement brulés dans le niveau (12) de la grille passent ensuite via les ouvertures (25) sur le deuxième niveau (13) de la grille pour permettre une continuité de leur combustion.

Cette disposition présente un avantage majeur pour réguler le flux des pellets sur la grille d'un côté, et pour maximiser le rendement énergétique en prolongeant le temps de combustion des pellets au niveau de la grille.

Un autre paramètre essentiel pour le bon fonctionnement du dispositif est la dimension et la disposition du canal (2). En effet, le canal (2) a une longueur (d) d'environ 10 cm à 15 cm et une section de 90 cm x120 cm² et un angle d'inclinaison d'environ 30 à 45 degrés, de préférence 30° par rapport au plan horizontal de la base (26). Ces paramètres permettent d'aboutir à une durée approximative de chauffage de l'ordre de 8 heures pour environ 12 à 15 kg de pellets.

Le montage de la grille est illustré à la figure 5. La grille (8) dispose de moyens (9, 9') pour se fixer au niveau de la base à la sortie du canal (2) grâce à deux changement de niveau pour recevoir les prolongements (9,9') de la surface du premier niveau de combustion (12). La position de la grille à la sortie du canal (2) est faite de manière à avoir un décalage (D) d'au moins 2 cm pour permettre d'isoler les pellets qui arrivent sur la grille de ceux qui sont encore dans le canal (2). La grille (8) est montée dans le dispositif de manière à avoir le plan du premier niveau de combustion (12) parallèle au plan (16) du canal (2).

La grille coopère d'un côté avec un canal d'admission de l'air frais (11), situé au niveau de la base (26) et de l'autre côté avec une cheminée (4) pour permettre l'évacuation de la chaleur vers l'extérieur.

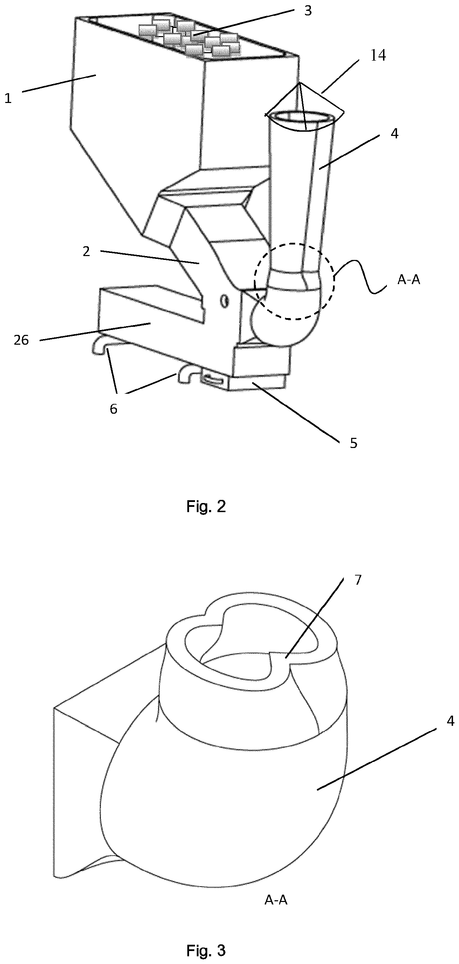

Dans un mode particulier, la cheminée est conçue pour provoquer un effet vortex grâce à un changement de section (7) à la sortie de la cheminée (4) tel qu'illustré à la figure 3.

Pour l'orientation de la chaleur vers l'air ambiant des cultures, la cheminée a été équipée par un chapeau situé à sa sortie. La hauteur de la cheminée est telle qu'elle ne dépasse pas la hauteur de la trémie (1)

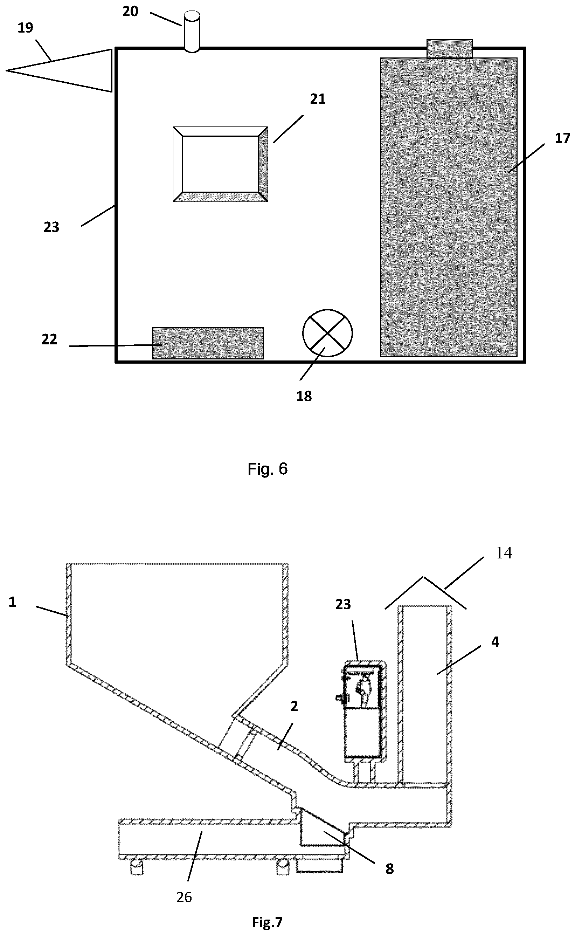

La figure 6 illustre l'agencement des différentes composantes du système de commande. Il comporte un réservoir de matière inflammable (17). Ledit réservoir coopère avec une pompe (18) reliée à une buse (19) pour orienter le jet sur la matière combustible (3) se trouvant sur la grille (8). La commande de la pompe se fait par le biais d'un capteur (20) de la température ambiante et d'une carte électronique de contrôle (21) contenant une consigne pour déclencher le feu au niveau de la grille (8).

Dans un mode particulier, la pompe est remplacée par une vanne avec l'utilisation de l'effet de la gravité pour créer le jet du liquide inflammable (ex. fuel).

L'ensemble des composants du système de commande est logé dans un boitier (23) dont l'emplacement est illustré à la figure 7.

Selon un aspect particulier de l'invention, le système de commande est alimenté par une batterie (22), de préférence une batterie longue durée de type lithium-ion. Selon un autre aspect, la matière combustible (3) est constituée par des pellets de bois ou des copeaux de bois séchés.

Selon un autre aspect de l'invention, la matière inflammable est soit de l'essence, soit de l'éthanol, ou toute autre matière inflammable du même type.

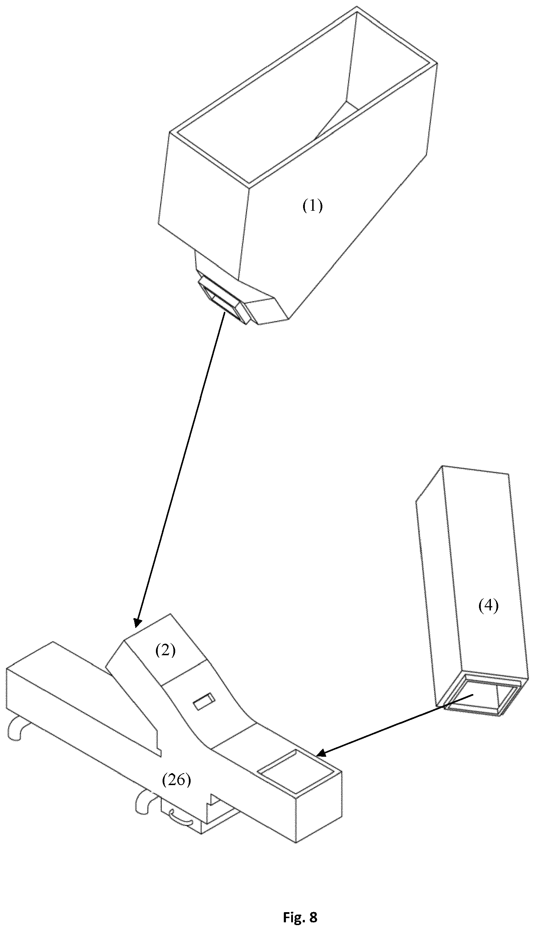

Selon un autre aspect, le corps du dispositif, composé des différentes partie (1, 4, 26), est fait d'un matériau argileux de type réfractaire (argile blanche) permettant une meilleure isolation thermique et une bonne résistance à la chaleur et à toute agression climatique. Le corps peut être conçu en une seule pièce ou en plusieurs parties selon les procédés usuels tels qu'illustré à la figure 8.

Selon un autre aspect, la surface interne de la trémie (1) et du canal (2) comporte un revêtement du type maillage céramique pour réduire le frottement.

Il est clair que l'usage du dispositif, peut s'étendre à d'autres applications de chauffage résidentiel ou industriel.

## Revendications

1. Dispositif de lutte antigel comprenant des moyens pour stocker une matière combustible solide, une grille de combustion et des moyens pour commander le démarrage de la combustion, le dispositif comprenant:
- un canal (2) constituant un prolongement de la sortie d'un réservoir (1) apte à contenir une matière combustible (3), ledit canal (2) faisant un angle de 30 à 45 degrés par rapport au plan horizontal de la base (26) du dispositif de manière à ce que la matière combustible (3) contenue dans le réservoir (1) puisse être acheminée automatiquement sous l'effet de la gravité vers la sortie dudit canal (2) ;
- une grille de combustion (8) située au niveau de la base (26) à la sortie du canal (2), la grille coopérant d'un côté avec un canal d'admission de l'air frais (11) situé au niveau de la base (26) et de l'autre côté avec une cheminée (4) pour permettre l'évacuation de la chaleur vers l'extérieur, ladite grille comportant au moins deux niveaux de combustion, un premier niveau (12) parallèle au plan inférieur (16) du canal (2) avec un décalage vers le bas d'au moins 2 cm, ledit premier niveau (12) étant constitué d'un maillage d'ouvertures longitudinales (24) distribuées de manière régulière sur l'ensemble de la surface du plan (12) de la grille, et un deuxième niveau (13) plus bas, constitué par un maillage d'ouvertures de tailles petites (25) par rapport au premier niveau (12) et ayant une distribution plus dense ;
- un système de commande (23) pour un démarrage automatique de la combustion qui comprend un réservoir pour liquide inflammable (22), une pompe (23) pour asperger la matière combustible (3) disponible sur la grille (8) avec le liquide inflammable (22) et une carte électronique (21) contenant une consigne pour déclencher le feu au niveau de la grille (8).

2. Dispositif de lutte antigel selon la revendication 1, **caractérisé en ce que** le canal (2) a une longueur d'environ 10 à 15 cm, et une section d'environ 90 à 120 cm².

3. Dispositif de lutte antigel selon la revendication 1, **caractérisé en ce qu'**il dispose d'une ou plusieurs arrivées secondaire d'air (10) situées à proximité de la grille (8).

4. Dispositif de lutte antigel selon la revendication 1, **caractérisé en ce que** le canal (2) fait un angle de 30 degrés par rapport à l'horizontale.

5. Dispositif de lutte antigel selon la revendication 1, **caractérisé en ce que** les parties (1, 26 ,4) constituantes du corps principal sont faites de matière argileuse, de préférence une argile réfractaire.

6. Dispositif de lutte antigel selon la revendication 5, **caractérisé en ce que** l'ensemble constitué par la trémie (1), la base (26), la cheminée (4) est fait par moulage en une seule pièce ou en plusieurs parties.

7. Dispositif de lutte antigel selon la revendication 1, **caractérisé en ce que** la cheminée (4) comporte un système vortex (7) pour favoriser une meilleure propagation de la chaleur.

8. Dispositif de lutte antigel selon la revendication 6, **caractérisé en ce que** la surface interne de la trémie (1) et du canal (2) comporte un revêtement du type maillage céramique pour réduire le frottement.

9. Dispositif de lutte antigel selon la revendication 1, **caractérisé en ce que** la cheminée (4) est équipée d'un chapeau situé à sa sortie, la hauteur de la cheminée (4) étant telle qu'elle ne dépasse pas la hauteur de la trémie (1).

## Patentansprüche

1. Frostschutzvorrichtung, umfassend Mittel, um ein festes brennbares Material zu lagern, einen Verbrennungsrost und Mittel, um den Start der Verbrennung zu steuern, wobei die Vorrichtung Folgendes umfasst:
- einen Kanal (2), der eine Verlängerung des Ausgangs eines Behälters (1) darstellt, der dazu ausgelegt ist, ein brennbares Material (3) zu enthalten, wobei der Kanal (2) einen Winkel von 30 bis 45 Grad mit Bezug auf die horizontale Ebene der Basis (26) der Vorrichtung bildet, so dass das brennbare Material (3), das im Behälter (1) enthalten ist, automatisch unter der Einwirkung der Schwerkraft hin zum Ausgang des Kanals (2) befördert werden kann;
- einen Verrennungsrost (8), der sich auf der Ebene der Basis (26) am Ausgang des Kanals (2) befindet, wobei der Rost einerseits mit einem Einlasskanal von Frischluft (11), der sich auf der Ebene der Basis (26) befindet, und andererseits mit einem Kamin (4) zusammenarbeitet, um die Ableitung von Wärme nach außen zu ermöglichen, wobei der Rost mindestens zwei Verbrennungsniveaus umfasst, ein erstes Niveau (12) parallel zur unteren Ebene (16) des Kanals (2) mit einer Verschiebung nach unten um mindestens 2 cm, wobei das erste Niveau (12) aus einem Netz von längs gerichteten Öffnungen (24) besteht, die auf regelmäßige Weise auf der gesamten Oberfläche der Ebene (12) des Rosts verteilt sind, und ein zweites, niedrigeres Niveau (13), das aus einem Netz von Öffnungen mit kleinen Größen (25) mit Bezug auf das erste Niveau (12) besteht und eine dichtere Verteilung aufweist;
- ein Steuersystem (23) für einen automatischen Start der Verbrennung, das einen Behälter für entflammbare Flüssigkeit (22), eine Pumpe (23), um das brennbare Material (3), das auf dem Rost (8) vorhanden ist, mit einer entflammbaren Flüssigkeit (22) zu bespritzen, und eine Leiterplatte (21), die eine Anweisung enthält, um das Feuer auf dem Niveau des Rosts (8) zu starten umfasst.

2. Frostschutzvorrichtung nach Anspruch 1, **dadurch gekennzeichnet, dass** der Kanal (2) eine Länge von ungefähr 10 bis 15 cm und einen Schnitt von ungefähr 90 bis 120 cm² aufweist.

3. Frostschutzvorrichtung nach Anspruch 1, **dadurch gekennzeichnet, dass** sie einen oder mehrere sekundäre Lufteingänge (10) umfasst, die sich in der Nähe des Rosts (8) befinden.

4. Frostschutzvorrichtung nach Anspruch 1, **dadurch gekennzeichnet, dass** der Kanal (2) einen Winkel von 30 Grad mit Bezug auf die Horizontale bildet.

5. Frostschutzvorrichtung nach Anspruch 1, **dadurch gekennzeichnet, dass** die Teile (1, 26 ,4), aus denen der Hauptkörper besteht, aus tonhaltigem Material, vorzugsweise aus Schamotte, hergestellt sind.

6. Frostschutzvorrichtung nach Anspruch 5, **dadurch gekennzeichnet, dass** die Einheit, bestehend aus dem Trichter (1), der Basis (26), dem Kamin (4) durch Formen aus einem einzigen Stück oder aus mehreren Teilen hergestellt ist.

7. Frostschutzvorrichtung nach Anspruch 1, **dadurch gekennzeichnet, dass** der Kamin (4) ein Wirbelsystem (7) umfasst, um eine bessere Ausbreitung der Wärme zu begünstigen.

8. Frostschutzvorrichtung nach Anspruch 6, **dadurch gekennzeichnet, dass** die Innenfläche des Trichters (1) und des Kanals (2) eine Verkleidung vom Typ keramisches Netz umfasst, um die Reibung zu reduzieren.

9. Frostschutzvorrichtung nach Anspruch 1, **dadurch gekennzeichnet, dass** der Kamin (4) mit einem Deckel ausgestattet ist, der sich am Ausgang befindet, wobei die Höhe des Kamins (4) derart ist, dass sie die Höhe des Trichters (1) nicht übersteigt.

## Claims

1. A frost control device comprising means for storing a solid combustible material, a combustion grate and means for controlling the start of combustion, the device comprising:
- a channel (2) forming an extension of the outlet of a tank (1) apt to contain a combustible material (3), said channel (2) extending at an angle of 30 to 45 degrees with respect to the horizontal plane of the base (26) of the device so that the combustible material (3) contained in the tank (1) can be automatically conveyed by gravity to the outlet of the channel (2);
- a combustion grate (8) located at the base (26) at the outlet of the channel (2), said grate cooperating on one side with a fresh air intake channel (11) located at the base (26) and on the other side with a chimney (4) to allow heat to be discharged to the outside, said grate having at least two combustion levels, a first level (12) parallel to the lower plane (16) of the channel (2) with a downward offset of at least 2 cm, said first level (12) consisting of a mesh of longitudinal openings (24) evenly distributed over the entire surface of the grate plane (12), and a lower second level (13), consisting of a mesh of openings of small sizes (25) with respect to the first level (12) and having a denser distribution;
- a control system (23) for automatic combustion start which comprises a flammable liquid tank (22), a pump (23) for spraying the combustible material (3) available on the grate (8) with the flammable liquid (22) and an electronic board (21) containing a setpoint for triggering the fire at the grate (8),

2. The frost control device according to claim 1, **characterized in that** the channel (2) has a length of about 10 to 15 cm and a cross-section of about 90 to 120 cm².

3. The frost control device according to claim 1, **characterized in that** said frost control device has one or a plurality of secondary air inlets (10) located in the vicinity of the grate (8).

4. The frost control device according to claim 1, **characterized in that** the channel (2) is at an angle of 30 degrees with respect to the horizontal.

5. The frost control device according to claim 1, **characterized in that** the constituent parts (1, 26, 4) of the main body are made of clay material, preferentially a refractory clay.

6. The frost control device according to claim 5, **characterized in that** the assembly comprised by the hopper (1), the base (26), the chimney (4) is made by molding in one piece or in a plurality of parts.

7. The frost control device according to claim 1, **characterized in that** the chimney (4) comprises a vortex system (7) to promote better heat propagation.

8. The frost control device according to claim 6, **characterized in that** the inner surface of the hopper (1) and the channel (2) has a ceramic mesh coating to reduce friction.

9. The frost control device according to claim 1, **characterized in that** the chimney (4) is equipped with a cap located at the outlet thereof, the height of the chimney (4) being such that said chimney does not exceed the height of the hopper (1).
